# EUROPEAN PATENT SPECIFICATION

(11) **EP 1 248 190 B1**
(45) Date of publication and mention of the grant of the patent: **06.06.2007**
(21) Application number: 01400835.3
(22) Date of filing: 02.04.2001
(51) Int. Cl.: G06F 9/44, G06F 1/00

(54) **Enabling and disabling software features**
Aktivieren und Deaktivieren von Softwarefunktionen
Activation et désactivation des fonctions logicielles

(43) Date of publication of application: 09.10.2002
(73) Proprietor: MOTOROLA, INC., Schaumburg, IL 60196 (US)
(72) Inventor: Gasparini, Stéphane Christian, 31170 Tournefeuille (FR); Khair, Pascal, 31500 Toulouse (FR); Bertrand, Yan Nicolas, 31500 Toulouse (FR)
(74) Representative: Cross, Rupert Edward Blount

(56) References cited:
- GB-A- 2 268 605

## Description

The present invention relates to enabling and disabling software features in fully featured software and in particular to a method of changing the available features in a software-implemented feature set containing a plurality of features. The invention also relates to the software itself and to a device with the software loaded therein.

It is known for suppliers of software or devices incorporating software to supply different versions of the same product having different feature sets. However, increasingly software which implements or provides features or functions is being developed containing software blocks corresponding to all potentially available features. The different software blocks are then enabled and disabled as appropriate to produce different versions of the software or families of devices having different features. The term "fully featured software" is sometimes used for such software.

As an example, it is noted that increasingly fully featured software is being used in devices such as, but not limited to, mobile radio-telephones, mobile radios, personal digital assistants and computers, and different models or families of products with different features are created by selective enablement of the corresponding software blocks.

Consumers may wish to temporarily or permanently alter the set of enabled features provided by the software from the feature set initially available and so it is desirable to provide a simple mechanism by which an enabled feature set in fully featured software can be altered.

It is known for demonstration versions of software to be made available to the public. It is sometimes possible to unlock the demonstration software on payment of a fee to obtain full use of the software. One known method for unlocking software requires the user to supply an authorising agent, such as the software supplier, with the user's name. The authorising agent uses a secret algorithm or secret code to generate an unlock code using the user's name and provides the unlock code to the user. The user enters the unlock code and the user name and the software uses the same secret algorithm or secret code to generate a confirmation unlock code. If the confirmation unlock code matches the unlock code entered by the user, the software is unlocked.

GB 2268605 describes a system for enabling functional options in a computer system by a user selecting functional codes corresponding to desired functional options and providing these functional codes to an authorising device, which are used by the authorising device to provide authorisation for the user selected options to the user.

However, once the software has been unlocked there is no protection against further copying of the unlocked software onto other machines. This is clearly undesirable to the software provider. In addition, there is no mechanism provided to allow enabling or disabling of software on a feature by feature basis.

The present invention seeks to alleviate at least some of the disadvantages of the prior art.

For a better understanding of the present invention, and to show how it may be brought into effect, reference will now be made, by way of example, to the accompanying drawings, in which:
Figure 1 shows a communication device in accordance with an exemplary embodiment of the invention;
Figure 2 shows an exemplary illustration of a tree of messages that might be displayed on the display of a communication device in accordance with the present invention;
Figure 3 shows a method of enabling a portion of software in order to make a corresponding feature available in accordance with an embodiment of the invention;
Figure 4 shows an exemplary illustration of a tree of messages with a displayed token;
Figure 5 shows an exemplary illustration of a tree of messages with an enabled feature; and
Figure 6 illustrates in more detail the unlocking procedure in accordance with an exemplary embodiment of the invention.

In accordance with the described embodiment of the invention, a feature change procedure is provided to change the availability to the user of one or more features in a software-implemented feature set containing a plurality of features.

This is achieved using a feature change key which authorises the locking or unlocking, as appropriate, of different features in the feature set. The feature change key is derived from a token generated by the software or the device containing the software. As a result, the feature change key is specific to the particular software or device in which the software is loaded and cannot be used to alter the availability of features on any other software or device. Moreover, the feature change key is specific to the authorized feature set and thus enables alteration of the feature set on a feature-by-feature basis.

The feature change procedure in accordance with the invention can be carrid out by the software or device user, by an after-sales representative, or at the point of sale, for example. Moreover, the exchange of information described can be achieved in a variety of ways, for example by means of the user interface of the device, or by way of any communication protocol between the device and a network server or other authorization device.

The following description of an exemplary embodiment of the invention relates to the use of an unlock key to unlock a desired feature by the enduser of a communication device by means of a user interface. However, it will be understood by a skilled person that other arrangements and embodiments of the invention are possible and the present invention is not limited to the described arrangements. Moreover, it will be clear that the invention is applicable to devices other than communication devices and to both a device loaded with the software and to the software itself. Most preferably, the invention can be used in devices with embedded fully featured software, such as mobile or portable communications devices or personal digital assistants.

In addition, it will be clear to a skilled person that the invention is not limited to unlocking of features, but is also applicable to any alteration in the feature set, such as the locking of features, or the simultaneous locking and unlocking of different features within the feature set using the same feature change key.

In accordance with the described embodiment of the invention, the exemplary communication device is provided with fully featured software, which implements a plurality of features. Of these features, only a subset is enabled in the exemplary communication device.

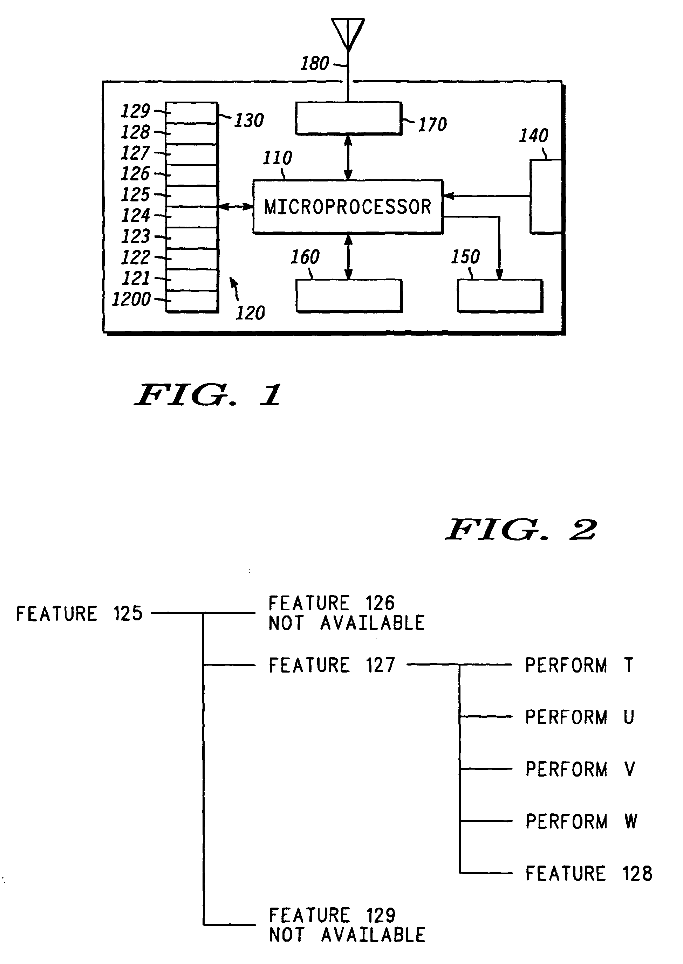

The communication device 100 in accordance with an exemplary embodiment of the invention is shown in Figure 1. The exemplary communication device 100 has a microprocessor 110 which controls the operation of the communication device under the control of software 120 stored in the program memory 130. The communication device 100 has input and output devices, such as a keyboard 140 and a display 150 for enabling interaction with the user of the communication device 100. The communication device 100 also has a memory 160 for storing data used during operation of the communication device. The program memory and the data memory are shown as separate memories. However, they may also be implemented as different logical parts of the same memory. At least part of the memory 160 is non-volatile. The exemplary communication device also has a communications section 170 connected to an antenna 180. Clearly the communications section 170 and antenna 180 could be omitted in other devices in accordance with the invention, which do not require communications capability.

The software 120 stored in the program memory 130 controls the operation of the communication device, and is arranged into software elements or blocks. Software elements 121, 122 etc. each control a particular function or feature. In the exemplary embodiment shown, software elements 125-129 relate to optional features of which software elements 125, 127 and 128 are enabled, such that those features are available to the user of the communication device. In contrast, elements 126 and 129 are not enabled, and the corresponding features are not available to the user of the communication device. Software element 1200 implements the feature change method in accordance with the invention to alter the enablement of the software elements 125-129, and hence the availability of the corresponding features to the user.

The user interacts with the communication device by means of the user interface provided by the software and the keyboard 140 and the display 150. An exemplary illustration of a tree of messages that might be displayed on the display is shown in Figure 2. Although the exemplary illustration shows a hierarchy of features, it will be clear to a skilled person that such a hierarchical arrangement of features is not necessary to the invention.

Figure 2 shows that feature 125 has three sub-features 126, 127 and 129. In turn feature 127 has four available actions, action T, action U, action V and action W, together with a further sub-feature 128. Currently features 125, 127 and 128 are available, or unlocked, and features 126 and 129 are locked, or unavailable.

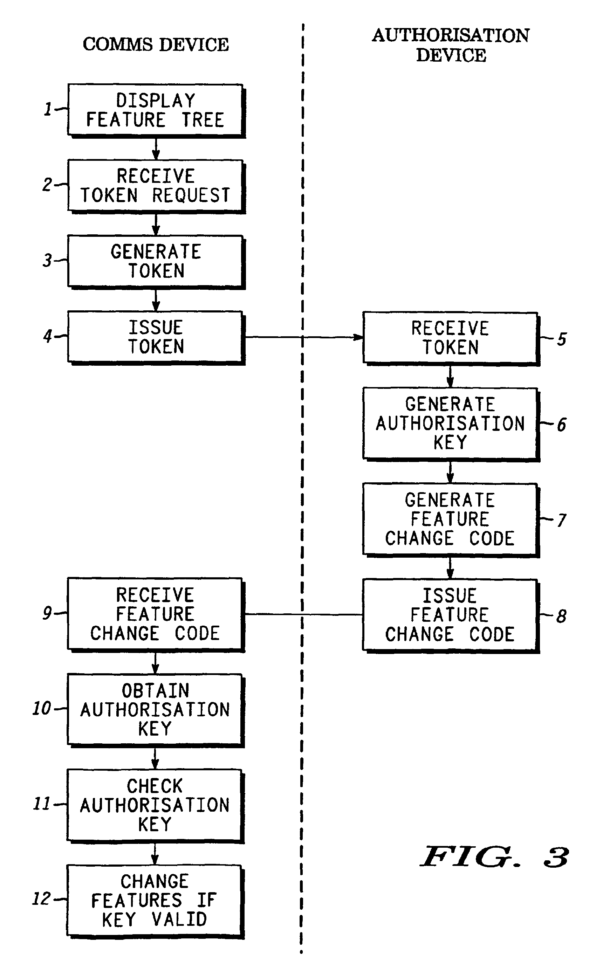

If the user wishes to use feature 126, this feature must be unlocked by enabling the corresponding software block 126. The method of enabling a portion of software in order to make a corresponding feature available in accordance with the invention will now be described with reference to Figure 3.

When the communication device displays the feature tree (step 1), such as the feature tree shown in Figure 2, the user can select the feature it is desired to unlock. The unlocking procedure is initiated with a token generation request received by the communication device 100 (step 2). The user can request a token by pressing a dedicated key or by selecting a menu item in the user interface, for example.

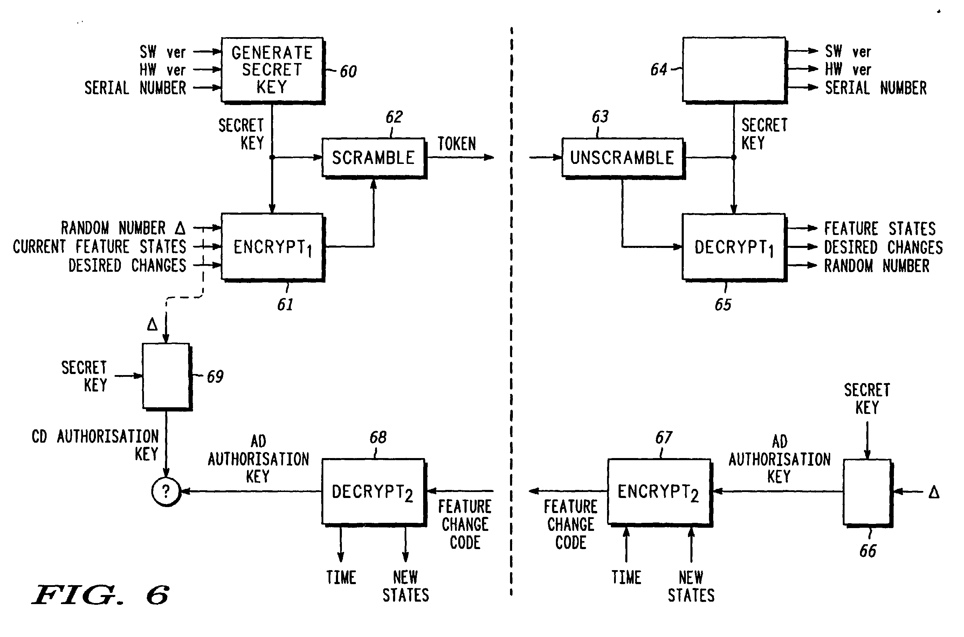

In response to the request from the user for a token, the communication device generates a token (step 3). The generation of the token will be described in more detail with reference to Figure 6.

The generated token is then issued by the communication device and subsequently received by the authorization device (steps 4 and 5). The secure authorization device may be a secure website, for example.

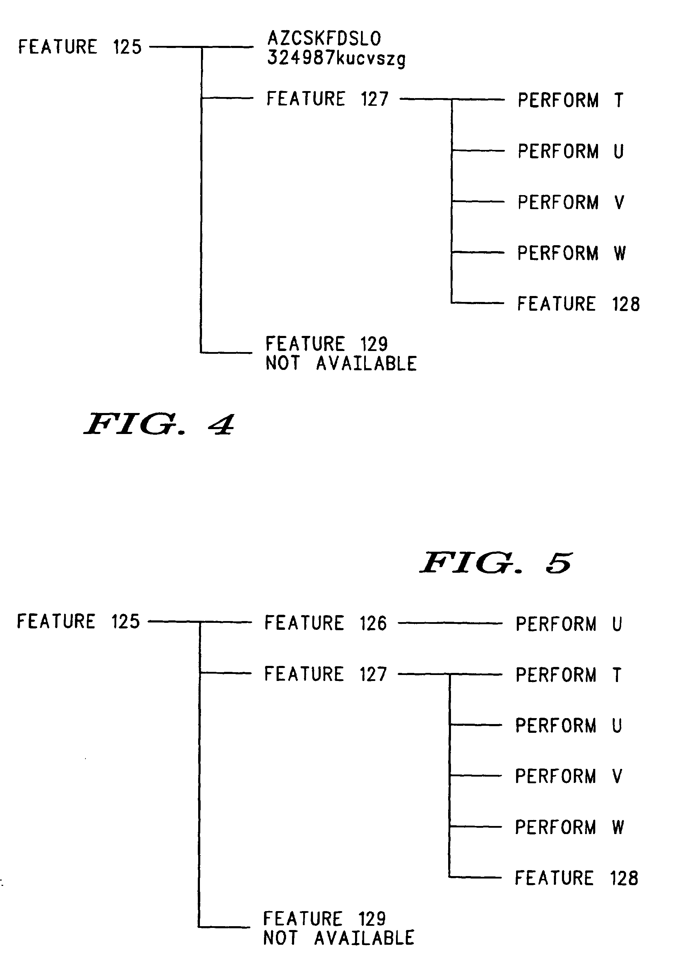

One way of achieving this is for the generated token to be displayed on the display 150 of the communication device 100 (step 4). An exemplary illustration of such a displayed token is shown in Figure 4.

The user can read the token from the display and submit it to the secure authorization device. However, clearly this transfer can be achieved in a number of different ways as will be apparent to a skilled person.

The authorisation device receives the token (step 5) and uses information derived from the token to generate an authorisation key (step 6) which is, in turn, used to generate a feature change code (step 7) which is issued by the authorisation device (step 8) and subsequently received by the communication device (100).

The user can input the feature change code from the authorisation device into the communication device 100 (step 9). The communication device 100 obtains an authorisation key from the feature change code (step 10). The communication device 100 checks the authorisation key to confirm authorisation for feature release (step 11) and if the unlock key is valid, the software 126 is enabled and access is granted to feature 126 (step 12). Preferably, the user interface is then updated to reflect the addition of the feature 126 to the feature set available on the communication device, as illustrated, for example in Figure 5.

Although the embodiment has been described in steps 4 and 5 and steps 7 and 8 as using the user interface, these steps could be provided automatically via any interface between the communication device and the authorisation device. In particular, the token and the feature change code may be transferred between the communication device and the authorisation device by conventional mail, email, internet, wireless internet, Bluetooth ^{™}, voice or any suitable communication protocol. In particular, this interface may be provided by means of secure wireless access using the communication section 170 and the antenna 180 via a cellular wireless communication or wireless Local Area Network (LAN) to a secure server acting as the authorisation device.

The formation of the token and the feature change code will now be described in more detail with reference to Figure 6.

In response to the receipt of a token request, the communication device generates a token using identification information and feature related information. Advantageously a random number is also used in the generation of the token. The use of the random number provides additional security and protection against unauthorised decryption.

Identification information may be software related information, for example a software identification number, which uniquely identifies the software, and/or device related data, and/or subscriber identification information. Device related data may be, for example, the Device Identification Number (DIN), which is a unique serial number of a communication device, or other device identification information. Subscriber identification information, for example as recorded in a SIM (Subscriber Identity Module) card, can also be used.
In addition, information such as the hardware version and/or the software version of the communication device can advantageously be used. A higher lever of security may be provided with the use of such additional information because an attempt to lock or unlock a feature which is not provided by or supported by the communication device can be avoided. In the exemplary embodiment shown in Figure 6, the DIN, software and hardware versions are all used as identification information in the token generation procedure.

The feature related information may be information relating to the current feature states and desired feature states. However, information relating to the alteration in features availability may be provided in another way, for example, the feature related information may relate only to the required change in feature availability. Preferably, the feature states are represented by the state of respective bits corresponding to features in the feature set, where a "1" indicates that the corresponding feature is enabled and a "0" indicated that the corresponding feature is not enabled.

Preferably, the feature-related information and the random number, if used, should be stored in non-volatile memory.

In order to generate a token from this identification information and feature related information in accordance with the illustrated embodiment of the invention, firstly, a secret key is generated from the identification information in a secret key generation step 60. The algorithm used for secret key generation can be any suitable algorithm known by a skilled person.

The secret key is used to encrypt feature related information in an encrypting step 61. In the illustrated embodiment of the invention, the feature related information is information relating to the features availability alteration being requested, for example relating to the current feature states and desired feature states.

In the exemplary embodiment, a random number delta is also used in the encrypting step 61 to improve security.

In an advantageous embodiment of the invention (not shown) payment information is also included in the token, for example payment information is also encrypted using the secret key in encryption step 61.

The encrypted information is then scrambled with the secret code in a scrambling step 62 to form the token which is transmitted to the authorisation device. The scrambling prevents the transmission in clear of the secret key, adding to the security of the system. As indicated earlier, the transmission may be achieved in a variety of ways.

In the authorisation device, the received token is unscrambled in an unscrambling step 63 to obtain the secret key and the encrypted information. The DIN, software and hardware version information can be obtained from the unscrambled secret key in step 64, which performs a reverse operation to that performed in the secret key generation step 60.

The secret key can then be used in step 65 to decrypt the feature related information and the random number delta, if used.

Thus the authorisation device has all necessary information relating to the identity of the software or of the device and the desired feature state. Preferably, the authorisation device maintains or has access to records relating to the hardware/software version number features and checks the suitability of the requested feature alteration. The authorisationdevice also handles any payment required for the feature alteration, such as a fee for feature unlocking or a refund for feature locking. As indicated previously, in an advantageous embodiment of the invention payment information is also included in the token.

Once the change in the available feature state is authorized, in order to confirm authorisation of the requested feature alteration an Authorisation Device (AD) authorisation key is generated by the authorisation device using a nonreversible operation.

In the described exemplary embodiment of the invention, a non-reversible operation is performed in step 66 on the random number delta and the secret key to obtain the AD authorisation key. However, as indicated above, the use of a random number is not essential to the invention, and the AD authorisation key can be generated by a non-reversible operation on any information related to the software or to the device known by the authorisation device and by the communication device. Preferably, this information is information that has been sent from the communication device to the authorisation device. In particular, the AD authorisation key may be formed using the DIN instead of a random number. Use of the random number is preferable since this ensures that the AD authorisation key is different for successive feature alteration requests, and so provides enhanced security.

The AD authorisation key and the information relating to the authorized feature set are encrypted in step 67 to generate the feature change code. The authorized feature set information may be feature state information for all states or information relating specifically to the feature state or states being altered, for example. In the illustrated embodiment, the authorized feature set information is new state information.

The encryption algorithm used in step 67 may be the same as that used in step 61 or may be a different encryption algorithm. In the exemplary embodiment shown in Figure 6, information relating to time is also input to the encryption step 67 to obtain the feature change code to provide additional security.

As indicated earlier, the feature change code issued by the authorization device may be provided to the communication device in a variety of ways. On receipt of the feature change code, the communication device 100 decrypts information relating to the authorized feature set and the AD authorisation key in step 68. Step 68 performs a reverse operation to the operation performed in step 67.

In addition, the communication device also generates its own Communcation Device (CD) authorisation key in step 69 using the same information and non reversible operation used by the authorisation device in step 66. In the described exemplary embodiment, the random number and the secret key are used to generate the CD authorisation key.

Finally, the CD authorisation key calculated by the communication device is compared with the AD authorisation key decrypted from the received unlock code. If the AD authorisation key matches the CD authorization key, the relevant feature availability change specified in the authorised feature set information can be implemented by the device, in this case the feature can be unlocked. If the AD authorisation key does not match the CD authorization key, the unlock code is rejected by the communication device, and no feature availability change is made by the communication device.

The failure in feature availability change may be notified to the user or to the authorization device. To improve security, the communication device may be locked after a number of failed attempts.

Although the invention has been described above as relating to a single device and a remote authorization device, the invention can be implemented in other ways. For example, the invention may be implemented in a network in which feature change requests from a number of users are sent through a single server of the network, which gathers token requests and then transfers the feature change code back to the connected users. In this way the implementation of the described method on the "device" side may be distributed throughout a network. Equally, although described above as an authorization device, the implementation of the described method on the "authorization" side may be distributed throughout a network.

Clearly, the present invention enables secure alteration of feature availability in fully featured software.

## Claims

1. A method of changing within a user device the available features in a software-implemented feature set containing a plurality of features, comprising the steps:
forming (3) a token from identification information and desired feature related information and issuing the token;
receiving (9) from an authorisation device a feature change code and obtaining an authorisation key and information related to an authorised feature set from the feature change code;
generating (10) a local authorisation key using the identification information;
comparing (11) the received authorisation key with the local authorisation key; and
implementing (12) in the user device the authorised feature set if the received authorisation key and the local authorisation key match.

2. The method as claimed in claim 1, wherein a random number is also used in the step of forming (3) the token.

3. The method as claimed in any preceding claim, wherein a random number is also used in the step of generating (10)the local authorisation key.

4. The method as claimed in any preceding claim, wherein the identification information comprises data relating to at least one of a software identification number; a Device Identification number, a Subscriber Identification Number.

5. The method as claimed in claim 4, wherein the identification information also comprises hardware version number data or software version number data.

6. The method as claimed in any preceding claim, where the step of forming (3) a token comprises the step of forming a secret key from the identification data and using the secret key as an encryption key to encrypt the feature related information.

7. The method as claimed in any preceding claim, where the step of generating (10) a local authorisation key comprises the step of forming a secret key from the identification data.

8. The method as claimed in any preceding claim, where the step of generating (10) a local authorisation key uses a non-reversible operation.

9. The method as claimed in any preceding claim, where the token contains payment information in respect of the requested feature alteration.

10. A method for an authorizing device to authorise change in the available features in a software-implemented feature set containing a plurality of features within a user device, the method comprising the steps:
receiving (5) a token from the user device;
obtaining identification information and desired feature related information from the token;
in response to a determination to authorise change in the feature set, the further steps:
using the identification information to generate (6) an authorisation key;
forming (7) a feature change code from the authorisation key and information related to an authorised feature set; and
issuing (8) the feature change code to the user device.

11. The method as claimed in claim 10, wherein a random number is also obtained from the received token.

12. The method as claimed in claim 11, wherein the random number is used in the step of generating (6) the authorisation key.

13. The method as claimed in any of claims 9 to 11, wherein the identification information comprises data relating to at least one of a software identification number; a Device Identification number, a Subscriber Identification Number.

14. The method as claimed in claim 13, wherein the identification information also comprises hardware version number data or software version number data.

15. The method as claimed in any of claims 9 to 14, where the step of obtaining information from the token comprises the step of deriving a secret key and encrypted data from the received token and using the secret key as a decryption key to decrypt the encrypted data to obtain feature related information.

16. The method as claimed in any of claims 9 to 15, where the step of generating (6) an authorisation key comprises the step of forming a secret key from the identification data.

17. The method as claimed in any of claims 9 to 16, where the step of generating a local authorisation key uses a non-reversible operation.

18. The method as claimed in any of claims 9 to 17, where payment information in respect of the requested feature alternation is obtained from the token.

19. Software code stored in memory arranged to implement the method as claimed in claims 1 to 18.

20. A user device comprising:
means (110) for forming a token from identification information and desired feature related information
means (170) for issuing the token to an authorization device;
means (170) for receiving a feature change code from the authorization device;
means (110) for obtaining an authorisation key and information related to an authorised feature set from the feature change code;
means (110) for generating a local authorisation key using the identification information;
means (110) for comparing the received authorisation key with the local authorisation key; and
means (110) for implementing the authorised feature set if the received authorisation key and the local authorisation key match.

21. Apparatus for authorizing change in the available features in a software-implemented feature set containing a plurality of features with a user device, the apparatus comprising:
means for receiving a token from the user device;
means for obtaining identification information and desired feature related information from the token;
means for determining to authorise change in the feature set;
means for generating an authorization key using the identification information in response to a determination to authorise change in the feature set;
means for forming a feature change code from the authorisation key and information related to an authorised feature set; and
means for issuing the feature change code to the user device.

22. A system for changing the available features in a software-implemented feature set containing a plurality of features, the system comprising:
means (110) for forming a token from identification information and desired feature related information and issuing the token;
means for receiving the token and obtaining identification information and desired feature related information from the token and in response to a determination to authorise change in the feature set;
using the identification information to generate an authorisation key;
means for forming a feature change code from the authorisation key and information related to an authorised feature set and issuing the feature change code; and
means (170) for receiving the feature change code and obtaining authorisation key and information related to the authorised feature set from the feature change code;
means (110) for generating a local authorisation key using the identification information;
means (110) for comparing the received authorisation key and the local authorisation key; and
means (110) for implementing the authorised feature set if the received authorisation key and the local authorisation key match.

## Patentansprüche

1. Verfahren zur Veränderung der verfügbaren Merkmale in einem software-implementierten Merkmalssatz, der eine Vielzahl von Merkmalen aufweist, innerhalb einer Benutzervorrichtung, wobei das Verfahren die folgenden Schritte umfasst:
Bildung (3) eines Merkmals bzw. Tokens aus Kennungsinformationen und gewünschten merkmalsbezogenen Informationen sowie Ausgabe des Tokens;
Empfang (9) eines Merkmalveränderungscodes von einer Autorisierungsvorrichtung und Gewinn eines Autorisierungsschlüssels und von Informationen bezüglich eines Satzes von autorisierten Merkmalen aus dem Merkmalveränderungscode;
Erzeugung (10) eines lokalen Autorisierungsschlüssels unter Verwendung der Kennungsinformationen;
Vergleich (11) des empfangenen Authorisierungsschüssels mit dem lokalen Authorisierungsschlüssel;
Implementierung (12) des Satzes von authorisierten Merkmalen in der Benutzervorrichtung, wenn der empfangene Autorisierungsschüssel und der lokale Autorisierungsschüssel übereinstimmen.

2. Vefahren nach Anspruch 1, **dadurch gekennzeichnet, dass** eine Zufallszahl ebenfalls in dem Schritt der Bildung (3) des Tokens verwendet wird.

3. Verfahren nach einem der vorhergehenden Ansprüche, **dadurch gekennzeichnet, dass** eine Zufallszahl ebenfalls in dem Schritt der Erzeugung (10) des lokalen Autorisierungsschlüssels verwendet wird.

4. Verfahren nach einem der vorhergehenden Ansprüche, **dadurch gekennzeichnet, dass** die Kennungsinformationen Daten bezüglich mindestens einer von einer Softwarekennungsnummer, einer Vorrichtungskennungsnummer oder einer Teilnehmerkennungsnummer aufweist.

5. Verfahren nach Anspruch 4, **dadurch gekennzeichnet, dass** die Kennungsinformation des Weiteren Hardwareversionsnummerdaten oder Softwareversionsnummerdaten aufweist.

6. Verfahren nach einem der vorhergehenden Ansprüche, **dadurch gekennzeichnet, dass** der Schritt der Bildung (3) eines Tokens den Schritt der Bildung eines geheimen Schlüssels aus den Kennungsdaten sowie der Verwendung des geheimen Schlüssels als einen Verschlüsselungsschlüssel zur Verschlüsselung der merkmalsbezogenen Informationen aufweist.

7. Verfahren nach einem der vorhergehenden Ansprüche, **dadurch gekennzeichnet, dass** der Schritt der Erzeugung (10) eines lokalen Autorisierungsschlüssels den Schritt der Bildung eines geheimen Schlüssels aus den Kennungsdaten aufweist.

8. Verfahren nach einem der vorhergehenden Ansprüche, **dadurch gekennzeichnet, dass** der Schritt der Erzeugung (10) eines lokalen Autorisierungsschlüssels eine nicht-reversible Operation verwendet.

9. Verfahren nach einem der vorhergehenden Ansprüche, **dadurch gekennzeichnet, dass** der Token Zahlungsinformationen hinsichtlich der angeforderten Merkmalsveränderung enthält.

10. Verfahren zur Autorisierung einer Veränderung der verfügbaren Merkmale durch eine Autorisierungsvorrichtung in einem software-implementierten Merkmalssatz, welcher eine Vielzahl von Merkmalen innerhalb einer Benutzervorrichtung aufweist, wobei das Verfahren die folgenden Schritte umfasst:
Empfang (5) eines Tokens von der Benutzervorrichtung;
Gewinn von Kennungsinformationen und gewünschten merkmalsbezogenen Informationen aus dem Token;
ansprechend auf eine Feststellung zur Autorisierung einer Veränderung in dem Merkmalssatz, die weiteren Schritte:
Verwendung der Kennungsinformationen zur Erzeugung (6) eines Autorisierungsschlüssels;
Bildung (7) eines Merkmalveränderungscodes aus dem Autorisierungsschlüssel und Informationen bezüglich eines autorisierten Merkmalssatzes; und
Ausgabe (8) des Merkmalsveränderungscodes an die Benutzervorrichtung.

11. Verfahren nach Anspruch 10, **dadurch gekennzeichnet, dass** eine Zufallszahl ebenfalls aus dem empfangenen Token gewonnen wird.

12. Verfahren nach Anspruch 11, **dadurch gekennzeichnet, dass** eine Zufallszahl in dem Schritt der Erzeugung (6) des Autorisierungsschlüssels verwendet wird.

13. Verfahren nach einem der Ansprüche 9 bis 11, **dadurch gekennzeichnet, dass** die Kennungsinformationen Daten bezüglich mindestens einer von einer Softwarekennungsnummer, einer Vorrichtungskennungsnummer oder einer Teilnehmerkennungsnummer aufweist.

14. Verfahren nach Anspruch 13, **dadurch gekennzeichnet, dass** die Kennungsinformationen des Weiteren Hardwareversionsnummerdaten oder Softwareversionsnummerdaten aufweisen.

15. Verfahren nach einem der Ansprüche 9 bis 14, **dadurch gekennzeichnet, dass** der Schritt des Gewinnens von Informationen von dem Token den Schritt des Ableitens eines geheimen Schlüssels und verschlüsselter Daten aus dem empfangenen Token und der Verwendung des geheimen Schlüssels als einen Entschlüsselungsschlüssel zur Entschlüsselung der verschlüsselten Daten zum Erhalt von merkmalsbezogenen Informationen aufweist.

16. Verfahren nach einem der Ansprüche 9 bis 15, **dadurch gekennzeichnet, dass** der Schritt der Erzeugung (6) eines Autorisierungsschlüssels den Schritt der Bildung eines geheimen Schlüssels aus den Kennungsdaten umfasst.

17. Verfahren nach einem der Ansprüche 9 bis 16, **dadurch gekennzeichnet, dass** der Schritt der Erzeugung eines lokalen Autorisierungsschlüssels eine nicht-reversible Operation verwendet.

18. Verfahren nach einem der Ansprüche 9 bis 17, **dadurch gekennzeichnet, dass** Zahlungsinformationen hinsichtlich der angeforderten Merkmalsveränderung aus dem Token gewonnen werden.

19. Im Speicher gespeicherter Stoftwarecode, der zur Implementierung des Verfahrens gemäß Anspruch 1 bis 18 angeordnet ist.

20. Benutzervorrichtung, die Folgendes aufweist.
Mittel (110) zur Bildung eines Tokens aus Kennungsinformationen und gewünschten merkmalsbezogenen Informationen;
Mittel (170) zur Ausgabe des Tokens an eine Autorisierungsvorrichtung;
Mittel (170) zum Empfang eines Merkmalveränderungscodes von der Autorisierungsvorrichtung;
Mittel (110) zum Gewinn eines Autorisiserungsschlüssels und von Informationen bezüglich eines autorisierten Merkmalssatzes aus dem Merkmalveränderungscode;
Mittel (110) zur Erzeugung eines lokalen Autorisierungsschlüssels unter Verwendung der Kennungsinformationen;
Mittel (110) zum Vergleich des empfangenen Autorisierungsschlüssels mit dem lokalen Autorisierungsschüssel; und
Mittel (110) zur Implementierung des autorisierten Merkmalssatzes, wenn der empfangene Autorisierungsschlüssel und der lokale Autorisierungsschlüssel übereinstimmen.

21. Vorrichtung zur Autorisierung einer Veränderung in dem verfügbaren Merkmalen in einem software-implementierten Merkmalssatz, welcher eine Vielzahl von Merkmalen mit einer Benutzervorrichtung aufweist, wobei die Vorrichtung Folgendes umfasst:
Mittel zum Empfang eines Tokens von der Benutzervorrichtung;
Mittel zum Gewinn von Kennungsinformationen und gewünschten merkmalsbezogenen Informationen aus dem Token;
Mittel zur Feststellung zur Autorisierung einer Veränderung in dem Merkmalssatz;
Mittel zur Erzeugung eines Autorisierungsschlüssels unter Verwendung der Kennungsinformationen ansprechend auf eine Feststellung zur Autorisierung einer Veränderung in dem Merkmalssatz;
Mittel zur Bildung eines Merkmalveränderungscodes aus dem Autorisierungsschlüssel und Informationen bezüglich eines autorisierten Merkmalssatzes; und
Mittel zur Ausgabe des Merkmalveränderungscodes an die Benutzervorrichtung.

22. System zur Veränderung der verfügbaren Merkmale in einem software-implementierten Merkmalssatz, welcher eine Vielzahl von Merkmalen aufweist, wobei das System Folgendes umfasst:
Mittel (110) zur Bildung eines Tokens aus Kennungsinformationen und gewünschten merkmalsbezogenen Informationen und zur Ausgabe des Tokens;
Mittel zum Empfang des Tokens und zum Gewinn von Kennungsinformationen und gewünschten merkmalsbezogenen Informationen aus dem Token und ansprechend auf eine Feststellung zur Autorisiserung einer Veränderung in dem Merkmalssatz;
Verwendung der Kennungsinformationen zur Erzeugung eines Autorisierungsschlüssels;
Mittel zur Bildung eines Merkmalveränderungscodes aus dem Autorisierungsschlüssel und Informationen bezüglich eines autorisierten Merkmalssatzes und Ausgabe des Merkmalveränderungscodes; und
Mittel (170) zum Empfang des Merkmalveränderungscodes und Gewinnen des Autorisierungsschlüssels und Informationen bezüglich des autorisierten Merkmalssatzes aus dem Merkmalveränderungscode;
Mittel (110) zur Erzeugung eines lokalen Autorisierungsschlüssels unter Verwendung der Kennungsinformationen;
Mittel (110) zum Vergleich des empfangenen Autorisierungsschlüssels und des lokalen Autorisierungsschlüssel; und
Mittel (110) zur Implementierung des autorisierten Merkmalssatzes, wenn der empfangene Autorisierungsschlüssel und der lokale Autorisierungsschlüssel übereinstimmen.

## Revendications

1. Procédé de changement, dans un dispositif utilisateur, de fonctions disponibles dans un ensemble de fonctions mis en oeuvre par un logiciel contenant une pluralité de fonctions, comprenant les étapes consistant à:
former (3) un jeton à partir d'informations d'identification et d'informations liées à une fonction souhaitée, et transmettre le jeton;
recevoir (9) de la part d'un dispositif d'autorisation un code de changement de fonction, et obtenir une clé d'autorisation et des informations relatives à un ensemble de fonctions autorisé à partir du code de changement de fonction;
générer (10) une clé d'autorisation locale en utilisant les informations d'identification;
comparer (11) la clé d'autorisation reçue avec la clé d'autorisation locale; et
mettre en oeuvre (12), dans le dispositif utilisateur, l'ensemble de fonctions autorisé si la clé d'autorisation reçue et la clé d'autorisation locale correspondent.

2. Procédé selon la revendication 1, dans lequel un nombre aléatoire est également utilisé à l'étape de formation (3) du jeton.

3. Procédé selon l'une quelconque des revendications précédentes, dans lequel un nombre aléatoire est également utilisé à l'étape de génération (10) de la clé d'autorisation locale.

4. Procédé selon l'une quelconque des revendications précédentes, dans lequel les informations d'identification comprennent des données relatives à au moins l'un d'un numéro d'identification de logiciel; d'un numéro d'identification de dispositif; d'un numéro d'identification d'abonné.

5. Procédé selon la revendication 4, dans lequel les informations d'identification comprennent également des données de numéro de version de matériel ou des données de numéro de version de logiciel.

6. Procédé selon l'une quelconque des revendications précédentes, dans lequel l'étape de formation (3) d'un jeton comprend l'étape de formation d'une clé secrète à partir des données d'identification et d'utilisation de la clé secrète comme une clé de cryptage afin de crypter les informations relatives à la fonction.

7. Procédé selon l'une quelconque des revendications précédentes, dans lequel l'étape de génération (10) d'une clé d'autorisation locale comprend l'étape de formation d'une clé secrète à partir des données d'identification.

8. Procédé selon l'une quelconque des revendications précédentes, dans lequel l'étape de génération (10) d'une clé d'autorisation locale utilise une opération non réversible.

9. Procédé selon l'une quelconque des revendications précédentes, dans lequel le jeton contient des informations de paiement par rapport à la modification de fonction demandée.

10. Procédé destiné à un dispositif d'autorisation afin d'autoriser un changement de fonctions disponibles d'un ensemble de fonctions mis en oeuvre dans un logiciel contenant une pluralité de fonctions dans un dispositif utilisateur, le procédé comprenant les étapes consistant à:
recevoir (5) un jeton de la part du dispositif utilisateur;
obtenir des informations d'identification et des informations relatives à la fonction souhaitée à partir du jeton;
en réponse à une détermination d'autorisation de changement de l'ensemble de fonctions, les étapes supplémentaires consistant à:
utiliser les informations d'identification afin de générer (6) une clé d'autorisation;
former (7) un code de changement de fonction à partir de la clé d'autorisation et des informations relatives à un ensemble de fonctions autorisé; et
transmettre (8) le code de changement de fonction au dispositif utilisateur.

11. Procédé selon la revendication 10, dans lequel un nombre aléatoire est également obtenu à partir du jeton reçu.

12. Procédé selon la revendication 11, dans lequel le nombre aléatoire est utilisé à l'étape de génération (6) de la clé d'autorisation.

13. Procédé selon l'une quelconque des revendications 9 à 11, dans lequel les informations d'identification comprennent des données relatives à au moins l'un d'un numéro d'identification de logiciel, d'un numéro d'identification de dispositif, d'un numéro d'identification d'abonné.

14. Procédé selon la revendication 13, dans lequel les informations d'identification comprennent également des données de numéro de version de matériel ou des données de numéro de version de logiciel.

15. Procédé selon l'une quelconque des revendications 9 à 14, dans lequel l'étape d'obtention d'informations à partir du jeton comprend l'étape de dérivation d'une clé secrète et de données cryptées à partir du jeton reçu et d'utilisation de la clé secrète comme une clé de décryptage afin de décrypter les données cryptées afin d'obtenir des informations relatives à la fonction.

16. Procédé selon l'une quelconque des revendications 9 à 15, dans lequel l'étape de génération (6) d'une clé d'autorisation comprend l'étape de formation d'une clé secrète à partir des données d'identification.

17. Procédé selon l'une quelconque des revendications 9 à 16, dans lequel l'étape de génération d'une clé d'autorisation locale utilise une opération non réversible.

18. Procédé selon l'une quelconque des revendications 9 à 17, dans lequel des informations de paiement par rapport à la modification de fonction demandée sont obtenues à partir du jeton.

19. Code logiciel stocké dans une mémoire agencé afin de mettre en oeuvre le procédé selon les revendications 1 à 18.

20. Dispositif utilisateur comprenant:
un moyen (110) de formation d'un jeton à partir d'informations d'identification et d'informations relatives à une fonction souhaitée;
un moyen (170) de transmission du jeton à un dispositif d'autorisation;
un moyen (170) de réception d'un code de changement de fonction de la part du dispositif d'autorisation;
un moyen (110) d'obtention d'une clé d'autorisation et d'informations relatives à un ensemble de fonctions autorisé à partir du code de changement de fonction;
un moyen (110) de génération d'une clé d'autorisation locale en utilisant les informations d'identification;
un moyen (110) de comparaison de la clé d'autorisation reçue avec la clé d'autorisation locale; et
un moyen (110) de mise en oeuvre de l'ensemble de fonctions autorisé si la clé d'autorisation reçue et la clé d'autorisation locale correspondent.

21. Appareil d'autorisation de changement de fonctions disponibles dans un ensemble de fonctions mis en oeuvre par un logiciel contenant une pluralité de fonctions avec un dispositif utilisateur, l'appareil comprenant:
un moyen de réception d'un jeton de la part du dispositif utilisateur;
un moyen d'obtention d'informations d'identification et d'informations relatives à une fonction souhaitée à partir du jeton;
un moyen de détermination d'une autorisation de changement de l'ensemble de fonctions;
un moyen de génération d'une clé d'autorisation en utilisant les informations d'identification en réponse à une détermination d'autorisation de changement de l'ensemble de fonctions;
un moyen de formation d'un code de changement de fonction à partir de la clé d'autorisation et des informations relatives à un ensemble de fonctions autorisé; et
un moyen de transmission du code de changement de fonction au dispositif utilisateur.

22. Système de changement de fonctions disponibles dans un ensemble de fonctions mis en oeuvre par un logiciel contenant une pluralité de fonctions, le système comprenant:
un moyen (110) de formation d'un jeton à partir d'informations d'identification et d'informations relatives à une fonction souhaitée et de transmission du jeton;
un moyen de réception du jeton et d'obtention d'informations d'identification et d'informations relatives à une fonction souhaitée à partir du jeton et en réponse à une détermination d'autorisation de changement de l'ensemble de fonctions;
l'utilisation des informations d'identification afin de générer une clé d'autorisation;
un moyen de formation d'un code de changement de fonction à partir de la clé d'autorisation et des informations relatives à un ensemble de fonctions autorisé et de transmission du code de changement de fonction; et
un moyen (170) de réception du code de changement de fonction et d'obtention d'une clé d'autorisation et d'informations relatives à l'ensemble de fonctions autorisé à partir du code de changement de fonction;
un moyen (110) de génération d'une clé d'autorisation locale en utilisant les informations d'identification;
un moyen (110) de comparaison de la clé d'autorisation reçue et de la clé d'autorisation locale; et
un moyen (110) de mise en oeuvre de l'ensemble de fonctions autorisé si la clé d'autorisation reçue et la clé d'autorisation locale correspondent.
